**Europäisches Patentamt**

**European Patent Office**

**Office européen des brevets**

(19)

(11) Veröffentlichungsnummer: **0 131 241 B1**

(12) **EUROPÄISCHE PATENTSCHRIFT**

(45) Veröffentlichungstag der Patentschrift: **30.12.92**

(51) Int. Cl.⁵: **G06K 7/14**

(21) Anmeldenummer: **84107704.3**

(22) Anmeldetag: **03.07.84**

(54) **Verfahren und Einrichtung zur Erfassung von Markierungen, die auf einer mit gedrucktem Dekor versehenen laufenden Materialbahn angebracht sind, durch fotoelektrische Mittel.**

(30) Priorität: **06.07.83 SE 8303845**

(43) Veröffentlichungstag der Anmeldung:
**16.01.85 Patentblatt 85/03**

(45) Bekanntmachung des Hinweises auf die Patenterteilung:
**30.12.92 Patentblatt 92/53**

(84) Benannte Vertragsstaaten:
**AT BE CH DE FR IT LI NL SE**

(56) Entgegenhaltungen:
**DE-A- 2 609 477**
**GB-A- 450 528**
**GB-A- 1 329 337**
**GB-A- 2 119 505**
**US-A- 3 891 829**

(73) Patentinhaber: **AB Tetra Pak**
**Ruben Rausings Gata**
**S-221 86 Lund(SE)**

(72) Erfinder: **Anders, Edvard Hilmersson**
**Eksjögatan 11**
**S-252 51 Helsingborg(SE)**
Erfinder: **Istvan, Marton Ulvros**
**Baldersvägen 8**
**S-223 56 Lund(SE)**

(74) Vertreter: **Müller, Hans-Jürgen, Dipl.-Ing. et al**
**Müller, Schupfner & Gauger Maximilianstrasse 6 Postfach 10 11 61**
**W-8000 München 1(DE)**

**Beschreibung**

Die Erfindung bezieht sich auf ein Verfahren zur Erfassung von Markierungen, die auf einer mit gedrucktem Dekor versehenen laufenden Materialbahn angebracht sind, durch fotoelektrische Mittel, sowie auf Steuermittel und eine Einrichtung zur Durchführung des Verfahrens.

In der Druck- und Verpackungstechnik ist es z. B. üblich, Bearbeitungsvorgänge an einer laufenden Materialbahn dadurch zu steuern, daß auf die Bahn Steuermarkierungen aufgedruckt werden, die durch Fotozellen oder andere optische Elemente erfaßbar sind.

Diese Markierungen oder Steuermarkierungen werden sehr häufig in einem Farbton aufgedruckt, der zu der Umgebung kontrastiert, insbesondere in Schwarz, und sie werden auf solche Bereiche der Materialbahn aufgebracht, die keine sonstigen gedruckten Markierungen oder Muster aufweisen. Solche Markierungen der Materialbahn sind von GB-A-0, 450, 528 bekannt. Die Markierungen können auch aus einem magnetisch erfaßbaren Material bestehen oder Markierungen sein, die durch mechanische Vorrichtungen erfaßbar sind, z. B. Löcher, Falzlinien, Schlitze usw.

Diese Steuermarkierungen werden z. B. beim Mehrfarbendruck dazu benutzt, die Positionen der in verschiedenen Mustern gedruckten Farben aneinander anzupassen, so daß die verschiedenen Farbmuster genau aufeinanderliegen. Ein zweiter, ähnlicher Anwendungsfall ergibt sich, wenn eine bereits bedruckte Materialbahn an einer bestimmten Stelle des Druckmusters mit einem weiteren Aufdruck, z. B. einem Datum od. dgl., zu versehen ist, oder wenn ein Druckmuster und ein Falzlinienmuster so angeordnet werden sollen, daß ein deckungsgleiches Umfalten beider erleichtert wird. Weitere Anwendungsmöglichkeiten ergeben sich z. B., wenn eine Packstoffbahn in einer Verpackungsmaschine od. dgl. mit genau einer Musterlänge vorwärtsbewegt werden soll, so daß einerseits der Aufdruck auf allen Packungen sich in der gleichen Stellung befindet und andererseits sichergestellt ist, daß das Falzlinienmuster mit dem Formwerkzeug der Verpackungsmaschine koinzidiert, so daß das Falten des Packstoffs entlang den Falzlinien, deren Lage vorbestimmt ist, erfolgen kann.

Wie bereits erwähnt, war es bisher erforderlich, die Materialbahn entweder mit einem in Längsrichtung verlaufenden leeren Streifen bzw. Band zu versehen, auf dem sich nur Steuermarkierungen befinden dürfen, oder es war notwendig, die Steuermarkierungen in jedem Fall in einer relativ großen leeren Zone anzubringen, wobei die Fotozelle nur dann aktiviert wird, wenn sicher ist, daß der Bereich mit der genannten Zone bzw. dem "Fenster" erreicht ist.

Natürlich stören solche leeren Streifen oder Zonen den allgemeinen Eindruck des Dekors, und es ist somit erwünscht, die Steuermarkierungen innerhalb des bestehenden Dekors oder auf sehr kleinen leeren Flächen unterzubringen, die grundsätzlich nur die Steuermarkierungen enthalten. Dadurch ergeben sich jedoch sehr große Probleme, denn die zur Erfassung der Markierungen verwendeten Elemente erfassen und registrieren nicht nur Steuermarkierungen, sondern auch Teile des Dekors, so daß nach der Erfassung von "Fehlsignalen" unerwünschte Verstell- oder Bearbeitungsvorgänge durchgeführt werden. Eine solche "Fehlsignalerzeugung" wird jedoch mit dem Verfahren nach der Erfindung gemäß Anspruch 1 verhindert.

Die Erfindung betrifft auch eine Vorrichtung und eine Materialbahn gemäß Anspruch 7 bzw. Anspruch 9.

Ein besonders vorteilhaftes Ausführungsbeispiel der Erfindung wird unter Bezugnahme auf die Zeichnung näher erläutert. Es zeigen:

Fig. 1    eine Steuermarkierung nach der Erfindung; und

Fig. 2    das Blockschaltbild einer Steuerung.

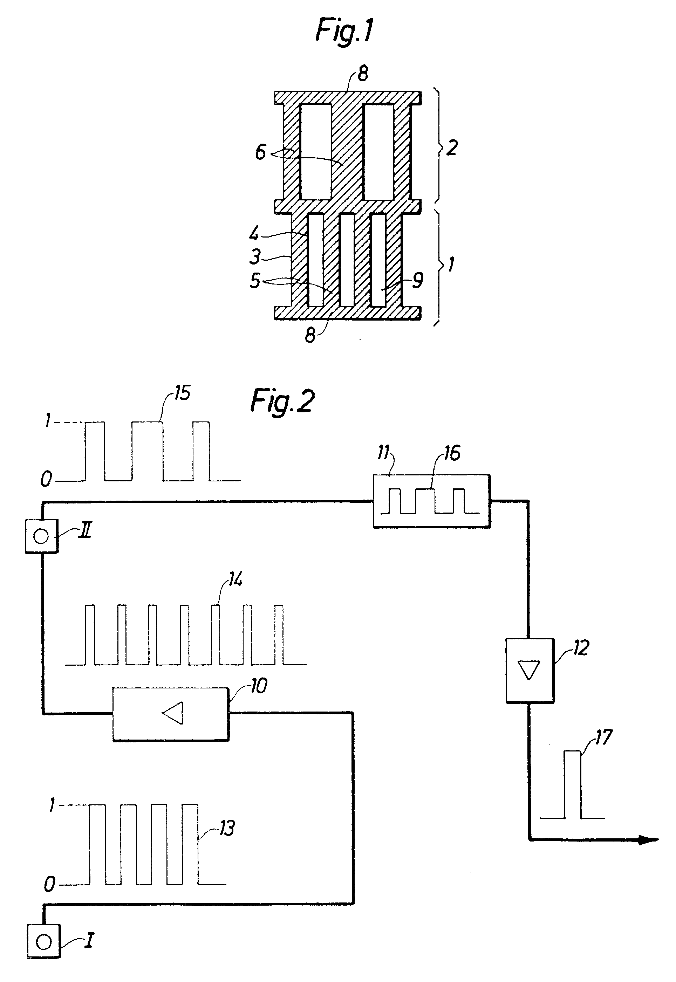

Die Steuermarkierungen von Fig. 1 bestehen aus zwei Markierungsgruppen 1 und 2. Im gezeigten Fall besteht die Markierungsgruppe 1 aus vier parallelen Zonen 5, die gleichbeabstandet voneinander angeordnet und in dunkler Farbe gedruckt sind. Die Anzahl Zonen und ihre jeweilige Anordnung kann zwar beliebig geändert werden, es hat sich jedoch in der Praxis als zweckmäßig erwiesen, die Strichzonen 5 der Markierungsgruppe 1 in der in Fig. 1 gezeigten Weise anzuordnen. Im hier erläuterten Fall ist die Breite der Zonen 5 und der Abstand 9 zwischen den jeweiligen Zonen 5 gleich. D. h., daß die Vorderkante 3 und die Hinterkante 4 jeder Zone 5 eine Folge von Signalen oder Impulsen 13 erzeugt, die in gleichen Abständen in Form eines Impulszugs an der Erfassungseinheit I abgegeben werden, wenn die Materialbahn mit gleichbleibender Geschwindigkeit an der Erfassungseinheit I vorbeiläuft. Die Erfassungseinheit I erfaßt Übergänge zwischen Hell und Dunkel (und umgekehrt), und jedesmal bei Erfassung eines solchen Übergangs gibt die Erfassungseinheit I ein Ausgangssignal ab. Der von der Erfassungseinheit I abgegebene Impulszug 13 hat - wie oben erwähnt - im vorliegenden Fall gleichbleibende Frequenz, wenn die die Steuermarkierungen tragende Materialbahn an der Erfassungseinheit I mit gleichbleibender Geschwindigkeit vorbeiläuft. Dies muß zwar, wie bereits erwähnt, nicht unbedingt der Fall sein, und die Einrichtung arbeitet ebenso gut, wenn die von der Erfassungseinheit I abgegebenen Impulse 13 mit willkürlicher gegenseitiger Frequenz aufeinanderfolgen.

In Fig. 2 ist angenommen, daß die Impulse des Impulszugs 13 den Wert 0 oder 1 haben, wobei der Wert 0 erhalten wird, wenn ein "heller Hintergrundbereich" erfaßt wird, während der Wert 1 erhalten wird, wenn ein "dunkler Hintergrundbereich" erfaßt wird. Die Impulse 13 werden in einem Rechenverstärker 10 verstärkt, und sie können auch zu einem Impulszug 14 umgeformt werden, wobei jeder Übergang zwischen den Werten 0 und 1 im Impulszug 13 in einen Impuls mit einer für den speziellen Fall gewählten Dauer umgeformt wird, die ausreichend lang sein sollte, so daß das Einschalten der Erfassungseinheit II gewährleistet und außerdem sichergestellt ist, daß diese Erfassungseinheit die Markierungsgruppe 2 zuverlässig erfaßt.

Bei jedem erfaßten "Farbtonübergang" wird die Erfassungseinheit II kurzzeitig aktiviert, wodurch die Markierungen 6 der zweiten Gruppe 2, die sich im Augenblick der Aktivierung unter der Erfassungseinheit II befinden, erfaßt werden. Diese Erfassung erfolgt derart, daß die Erfassungseinheit II ein Signal erzeugt, wenn die dunkle Zone erfaßt wurde, und kein Signal erzeugt, wenn die helle Zone erfaßt wurde. (Es ist auch möglich, den Anzeigevorgang umgekehrt ablaufen zu lassen.) D. h., daß die Erfassung durch die Erfassungseinheit II mit Hilfe der Markierungen der ersten Gruppe 1 gesteuert wird, wobei die erste Gruppe üblicherweise als Aktivierungsimpulsgeber oder "Taktgeber" bezeichnet wird, und daß die Erfassungseinheit II über einen Verstärker, z. B. einen Rechenverstärker, einen "Impulszug" 15 erzeugt, also eine Serie von Implulsen mit Unterbrechungen, die den Teilen entsprechen, an denen nur ein heller Farbton erfaßt wurde. Wenn man annimmt, daß die Erfassung einer dunklen Farbe in einem Impuls resultiert, der mit 1 bezeichnet wird, und die Erfassung einer hellen Farbe in einem Impulsausfall resultiert, der mit 0 bezeichnet wird, so wird ein Impulszug 15 (z. B. 11 01 00 11), der im hier behandelten Fall 8 Impulsabschnitte umfaßt, erzeugt, da die Markierung der ersten Gruppe, die als "Taktgeber" wirkt, aus vier Farbzonen besteht, was acht Farbübergänge von einer dunklen zu einer hellen Zone und umgekehrt zur Folge hat. Dieser Impulszug, der in Fig. 2 mit 15 bezeichnet ist, kann in einem Speicher oder einem Schieberegister 11 gespeichert und mit einem Wert oder Impulscode 16 verglichen werden, der einem zweiten Speicher oder sogenannten Vergleicher zugeführt wird. Der mit Hilfe der Erfassungseinheit II erzeugte Impulszug 15 wird in dem Vergleicher ständig mit dem Bezugs-Impulszug oder Impulscode 16, der im Speicher 11 gespeichert ist, verglichen, und bei vollständiger Übereinstimmung wird ein Signal 17 praktisch im gleichen Augenblick erzeugt, in dem der letzte Farbübergang der Markierungsgruppe 1 aufgenommen wird. Das Ausgangssignal 17 kann zur Aktivierung von Vorrichtungen zur Durchführung von Bearbeitungsvorgängen an der Materialbahn, z. B. Bedrucken, Stanzen von Löchern oder Lagenachstellung der Bahn, genutzt werden.

Für eine zuverlässige Erfassung muß die zweite Markierungsgruppe 2 so positioniert sein, daß sie niemals "Rand in Rand" mit den Markierungen der ersten Gruppe 1 zusammenfällt. Stattdessen muß sichergestellt sein, daß die Randbereiche der Markierungen der ersten Gruppe 1 auf eine "randbereichsfreie" Zone 6 an den Markierungen der zweiten Gruppe 2 treffen. Im übrigen können die Markierungen 6 der zweiten Gruppe 2 willkürlich so angeordnet sein, daß eine frei wählbare Folge von Aufzeichnungen von der Erfassungseinheit II erhalten wird. Selbstverständlich muß diese vorbestimmte oder gewählte Folge von Aufzeichnungen, d. h., der Impulszug 15, ein aufgezeichnetes Gegenstück in dem Speicher des Vergleichers 11 enthalten, so daß die Erfassung und "Anerkennung einer richtigen Markierung" möglich ist.

Wenn Schwierigkeiten auftreten, etwa weil sich die Erfassungseinheit II bei Empfang des Aktivierungsimpulses in der Nähe des Randbereichs einer Zone 6 der Markierungsgruppe 2 befindet, weil sich z. B. während des Druckvorgangs infolge der von den Gummidruckklischees ausgeübten Kompression die Steuermarkierung hinsichtlich ihrer Lage geringfügig verschoben hat, was beim Gummiklischeedruck ständig geschieht, kann ein Ausgleich dadurch vorgenommen werden, daß die Erfassungseinheit II in Bahnlängsrichtung z. B. mittels einer Stellschraube verschiebbar angeordnet ist.

Bei der praktischen Anwendung der Einrichtung wird eine bereits bedruckte Packstoffbahn verwendet, die einerseits sehr viel Werbe- und Informationstext trägt, der eine Vielzahl mehr oder weniger deutlicher Übergänge zwischen hellen und dunklen Abschnitten bildet. Außerdem weist die Packstoffbahn eine Steuermarkierung auf, die jedoch gemäß der Erfindung aus zwei Gruppen 1 und 2 von Markierungszonen 5 und 6 besteht, wobei diese Zonen aus drucktechnischen Gründen durch schmale Stege 8 miteinander verbunden sind, die in Bahnlängsrichtung verlaufen. Diese Stege 8 haben nur die Funktion sicherzustellen, daß die die Stege bildenden Teile des Blocks eine Versteifungswirkung auf die Zonen 5 und 6 ausüben, und zwar insbesondere dann, wenn das Drucken mit Gummiklischees erfolgt, bei denen - wie bereits erwähnt - die Gefahr besteht, daß sie beim Anpressen an eine Druckplatte verformt werden. Diese Verformungsgefahr wird jedoch durch die Verbindungsstege 8 verringert, die den gegenseitigen Abstand zwischen den Zonen 5 und 6 gleichbleibend halten.

Wenn die Steuermarkierungen 1 und 2 tragende bedruckte Packstoffbahn in die Verpackungsmaschine eingeführt und durch diese geführt wird, wird ein schmaler Bereich der Bahn ständig hinsichtlich des Auftretens heller und dunkler Teile von einer Einrichtung nach der Erfindung abgetastet, die zwei Erfassungseinheiten I und II umfaßt, die entweder nebeneinander oder hintereinander in einem bestimmten Abstand angeordnet sind. (In diesem Fall müssen auch die Markierungsgruppen 1 und 2 hintereinander mit einem Abstand angeordnet sein, der dem Abstand zwischen den Erfassungseinheiten I und II entspricht.)

Wenn die Packstoffbahn an der Erfassungseinheit I vorbeiläuft, werden bei Erfassung von Übergängen zwischen Abschnitten mit dunklerem oder hellerem Farbton Impulse 13 erzeugt, und diese Impulse werden in der erläuterten Weise verstärkt unter Bildung eines Impulszugs 14, der die Aktivierung der Erfassungseinheit II steuert. Jedesmal, wenn die Erfassungseinheit II durch einen Impuls von der Erfassungseinheit I aktiviert wird, erfaßt sie, ob der Teil der Materialbahn, der sich unter der Erfassungseinheit bzw. Fotozelle befindet, einen dunklen oder hellen Farbton hat, und in Abhängigkeit vom Erfassungsergebnis erzeugt sie Impulse 15, die einem sogenannten Schieberegister 11 zugeführt werden. Dieses umfaßt auch einen sogenannten Vergleicher, also eine Speichereinheit für Impulse mit einer bestimmten programmierbaren Impulsfolge. Die Funktion des Schieberegisters/Vergleichers 11 kann so beschrieben werden, daß ein Impulszug 15 kontinuierlich nach Maßgabe der Erfassung des Dekors der Packstoffbahn eingegeben wird. Wenn in irgendeinem Teil des Impulszugs 15 die Impulsfolge gleich derjenigen wird, die im Vergleicher 11 gespeichert ist, wird zum gleichen Zeitpunkt, zu dem Übereinstimmung mit dem letzten Impuls der richtigen Impulsfolge besteht, ein Ausgangssignal 17 erzeugt. Das Ausgangssignal 17 kann im Verstärker 12 verstärkt werden, so daß es anschließend zur Steuerung eines Betriebsvorgangs dienen kann.

Praktische Versuche haben ergeben, daß es in den meisten Fällen vollständig ausreicht, vier dunkle Zonen 5 in den Markierungen der ersten Gruppe 1 zu haben, wodurch die Erfassungseinheit II achtmal aktiviert wird und somit einen Impulszug bestimmter Kombination jedesmal erzeugt, wenn die Steuermarkierungsgruppen 1 und 2 die Erfassungseinheiten I und II passieren. Zwischen Erfassungsvorgängen der Steuermarkierungen 1 und 2 werden natürlich auch Impuls erzeugt, die aus Übergängen zwischen dunkleren und helleren Abschnitten des Dekors der Packstoffbahn resultieren, und diese so erzeugten Impulse werden in das Schieberegister 11 eingegeben und mit der im Vergleicher gespeicherten Kombination verglichen; aber die Wahrscheinlichkeit, daß das vorhandene Dekor in einem Impulszug 15 mit der "richtigen" Kombination resultiert, ist so klein, daß sie praktisch vernachlässigbar ist. Wenn es aus irgendeinem Grund erwünscht ist, eine noch bessere Erfassungssicherheit zu gewährleisten, können anstatt vier fünf farbige Zonen 5 in der Steuermarkierungsgruppe 1 vorgesehen sein, so daß die Erfassungseinheit II zehnmal bzw. durch zehn "Taktimpulse" aktiviert wird und zehn Erfassungsvorgänge durchführt (wobei ein korrekter Impulszug zehn Impulseinheiten anstatt acht aufweist). In gleicher Weise ist es auch möglich, weniger als vier farbige Zonen in der Steuermarkierungsgruppe 1 zu verwenden, wenn das Dekor einfacher ist und nicht viele und komplexe Farbelemente umfaßt.

Es hat sich in der Praxis als vorteilhaft erwiesen, daß der Impulszug 15 durch die Erfassung einer dunklen Zone ausgelöst wird; dies ist jedoch nicht unbedingt erforderlich. Die Anzahl Strichmarkierungen 6 der zweiten Markierungsgruppe 2 kann gleich oder kleiner als die Anzahl Strichmarkierungen der ersten Steuermarkierungsgruppe 1 sein. Im allgemeinen ist die Anzahl Farbzonen 6 der zweiten Gruppe 2 geringer als diejenige der ersten Gruppe 1, und zwar deshalb, weil die gewählte Kombination von Impulsen im erfaßten Impulszug häufig zwei oder mehr "Nullimpulse oder Einsimpulse" nebeneinander umfaßt, was bedeutet, daß diese Impulse in der Markierungsgruppe 2 durch eine breitere farbige oder farbfreie Zone dargestellt sind.

## Patentansprüche

1. Verfahren zur Erfassung von Markierungen auf einer laufenden Materialbahn durch Mittel, bei dem eine Markierung von einem Detektor und eine andere Markierung von einem anderen Detektor erfaßt und in Abhängigkeit von Ausgangssignalen der Detektoren Bearbeitungsvorgänge mit der Materialbahn gesteuert werden, **dadurch gekennzeichnet,** daß beide Markierungen aus je mindestens einer Gruppe (1, 2) von Strichmarkierungen (5, 6) gebildet und die Strichmarkierungen (5) der einen Gruppe (1) nach dem Erfassen durch den einen als Taktgenerator (I) verwendeten Detektor zum Aktivieren einer Ausgangs-Impulsfolge (15) verwendet werden, welche durch Ausgangssignale des anderen, als Code-Detektor (II) verwendeten Detektors gebildet bzw. ausgelöst werden, daß die Ausgangs-Impulsfolge (15) in einem Vergleicher (11) mit einer vorgegebenen Impulsfolge verglichen wird und daß in Abhängigkeit vom Vergleichsergebnis die Steuerung des betreffenden Bearbeitungsvorgangs durchgeführt wird.

2. Verfahren nach Anspruch 1,
**dadurch gekennzeichnet,**
daß die Ausgangs-Impulsfolge (15) des Code-Detektors (II) in ein Schieberegister eingegeben wird.

3. Verfahren nach Anspruch 1 oder 2,
**dadurch gekennzeichnet,**
daß aus den in Bandbewegungsrichtung vorlaufenden Vorderrändern (3) und/oder aus den nachlaufenden Hinterrändern (4) von als dunkle Zonen gebildete Strichmarkierungen (5) der einen Gruppe (1) im Taktdetektor (I) Taktimpulse (13) erzeugt und zum Aktivieren bzw. Takten des Codedetektors (II) verwendet werden.

4. Verfahren nach Anspruch 3,
**dadurch gekennzeichnet,**
daß der Codedetektor (II) dann mittels der Taktimpulse (13) aktiviert wird, wenn er Zonen von Strichmarkierungen (6) oder Zonen zwischen diesen im Abstand von den Rändern solcher Zonen erfaßt.

5. Verfahren nach Anspruch 3 oder 4,
**dadurch gekennzeichnet,**
daß die Taktimpulse (13) in Auslöseimpulse umgeformt werden, welche den Codedetektor (II) auslösen bzw. takten.

6. Verfahren nach einem der vorhergehenden Ansprüche,
**dadurch gekennzeichnet,**
daß Digitalimpulse für die Taktimpulse (13), Auslöseimpulse (14) und/oder die Ausgangsimpulsfolge (15) des Codedetektors (II) verwendet werden.

7. Vorrichtung zur Durchführung des Verfahrens nach einem der vorhergehenden Ansprüche, mit zwei Detektoren zum Erfassen von Markierungen der Materialbahn, mit einer Auswerteeinrichtung zum Auswerten der Ausgangssignale der Detektoren und mit einer Steuereinrichtung, die in Abhängigkeit vom Auswertungsergebnis der Auswerteeinrichtung die Bearbeitung der Materialbahn steuert,
**dadurch gekennzeichnet,**
daß beide Markierungen aus je mindestens einer Gruppe (1, 2) von Strichmarkierungen (5, 6) gebildet sind, daß ein Detektor als Taktdetektor (I) Strichmarkierungen (5) einer Markierungsgruppe (1) erfaßt und Taktsignale (13) erzeugt, welche eine Ausgangs-Impulsfolge (15) des anderen Detektors aktivieren, der als Codedetektor (II) Strichmarkierungen (5) einer anderen Markierungsgruppe (2) erfaßt, daß die Auswerteeinrichtung einen Vergleicher (11) aufweist, der die Ausgangs-Impulsfolge (15) des Codedetektors (II) mit einer in einem Speicher gespeicherten Impulsfolge vergleicht und im Falle der Übereinstimmung des sich aus der Ausgangs-Impulsfolge (15) ergebenden, erfaßten Codes mit der gespeicherten Impulsfolge die Steuervorrichtung betätigt.

8. Vorrichtung nach Anspruch 7,
**dadurch gekennzeichnet,**
daß der Vergleicher (11) ein Schieberegister aufweist, das die Digitalimpulse aufweisende Ausgangs-Impulsfolge (15) des Codedetektors (II) aufnimmt und einen ständigen Vergleich durchführt.

9. Materialbahn mit im wesentlichen parallel zueinander aufgebrachten und von Detektoren (I, II) erfaßbaren Strichmarkierungen zur Durchführung des Verfahrens nach einem der Ansprüche 1-6, bei der sich in ihrer Bewegungsrichtung helle Zonen (9) und dunkle, die Strichmarkierungen (5, 6) bildenden Zonen abwechseln,
**dadurch gekennzeichnet,**
daß zwei Gruppen (1, 2) von Strichmarkierungen (5, 6) derart einander zugeordnet sind, daß die Vorderränder (3) bzw. Hinterränder (4) der einen Gruppe (1) von Strichmarkierungen (5) auf randbereichsfreie Zonen der anderen Gruppe (2) treffen.

10. Materialbahn nach Anspruch 9,
**dadurch gekennzeichnet,**
daß die Vorderränder (3) bzw. Hinterränder (4) der einen Gruppe (1) von Strichmarkierungen (5) jeweils auf randbereichsfreie Zonenteile treffen.

11. Materialbahn nach Anspruch 9 oder 10,
**dadurch gekennzeichnet,**
daß sich die Strichmarkierungen (5, 6) jeder Gruppe (1, 2) in gleichen Abständen voneinander befinden.

12. Materialbahn nach einem der Ansprüche 9-11,
**dadurch gekennzeichnet,**
daß die Anzahl der Strichmarkierungen (5) der einen, zum Takten dienenden Gruppe (1) größer ist als die Anzahl der Strichmarkierungen (6) der anderen Gruppe (2).

13. Materialbahn nach einem der Ansprüche 9-12,
**dadurch gekennzeichnet,**
daß die Strichmarkierungen (5, 6) beider Gruppen (1, 2) entlang ihrer Endbereiche durch schmale Rechteckstreifen (8) verbunden sind, die rechtwinklig zu den Strichmarkierungen (5, 6) verlaufen.

## Claims

1. A method of sensing marks on a travelling web of material with the aid of means in which a mark is detected by one detector and another mark is detected by another detector and processing operations of the web of material are controlled in response to output signals from said detectors, characterized in that both marks are respectively composed of at least a group (1, 2) of bar marks (5, 6) and the bar marks (5) of the one group (1) after sensing by the one detector operating as a timer (I) are utilized to energise a sequence of output pulses (15) which are formed or triggered by output signals from the other detector operating as a code detector (II), that the output pulse sequence (15) is compared in a comparator (11) with a predetermined pulse sequence and that the control of the respective processing operation is performed in response to the result of comparison.

2. The method claimed in claim 1, characterized in that the output pulse sequence (15) from the code detector (II) is written into a shift register.

3. The method claimed in claim 1 or claim 2, characterized in that timing pulses (13) are generated in the timing detector (I) from the leading edges (3) leading in the travelling direction of the web and/or from the following trailing edges (4) of bar marks (5) of said one group (1) which are formed as dark zones, said timing pulses being used for energising or timing the code detector (II).

4. The method claimed in claim 3, characterized in that the code detector (II) is energised by the timing pulses (13) whenever it detects zones of bar marks (6) or zones therebetween which are spaced from the edges of such zones.

5. The method claimed in claim 3 or claim 4, characterized in that the timing pulses (13) are converted to trigger pulses for triggering or timing the code detector (II).

6. The method claimed in any one of the preceding claims, characterized in that digital pulses are used for the timing pulses (13), for the trigger pulses (14) and/or for the output pulse sequence (15) of the code detector (II).

7. An apparatus for carrying out the method claimed in any one of the preceding claims, comprising two detectors for detecting marks on the web of material, evaluating means for evaluating the output signals from said detectors, and control means for controlling processing of the web of material in response to the result of evaluation from said evaluating means, characterized in that both marks are respectively composed of at least a group (1, 2) of bar marks (5, 6), that a detector operating as timing detector (I) detects bar marks (5) of one group (1) of marks and generates timing signals (13) for triggering an output pulse sequence (15) from said other detector which as a code detector (II) detects bar marks (5) of another group (2) of marks, that said evaluating means comprises a comparator (11) for comparing the output pulse sequence (15) from the code detector (II) with a pulse sequence stored in a memory means and for actuating said control means in case of coincidence of the detected code resulting from the output pulse sequence (15) with the stored pulse sequence.

8. The apparatus claimed in claim 7, characterized in that said comparator (11) includes a shift register for receiving the output pulse sequence (15) from said code detector (II) which comprises digital pulses and for performing a continual comparison.

9. A web of material comprising substantially mutually parallel bar marks adapted to be sensed by detectors (I, II) for carrying out the method as claimed in any one of the claims 1 to 6, in which light zones (9) and dark zones forming the bar marks (5, 6) alternate in the travelling direction of said web, characterized in that two groups (1, 2) of bar marks (5, 6) are associated with one another such that the leading edges (3) or, respectively, the trailing edges (4) of the one group (1) of bar marks (5) are contiguous with edge portion-free zones of the other group (2).

10. The web of material claimed in claim 9, characterized in that the leading edges (3) or the trailing edges (4) of the one group (1) of bar marks (5) are respectively disposed adjacent edge portion-free zone portions.

11. The web of material claimed in claim 9 or claim 10, characterized in that the bar marks (5, 6) of each group (1, 2) are equi-distantly spaced from each other.

12. The web of material claimed in any one of the claims 9 to 11, characterized in that the number of bar marks (5) of the one group (1) used for timing is greater than the number of bar marks (6) of the other group (2).

13. The web of material claimed in any one of the claims 9 to 12, characterized in that the bar marks (5, 6) of both groups (1, 2) are interconnected along their end portions by narrow rectangular strips (8) which extend at right angles to the bar marks (5, 6).

**Revendications**

1. Procédé pour détecter des marques sur une bande mobile de matériau grâce à des moyens photo-électriques, dans lequel une marque est détectée par un détecteur et une autre marque par un autre détecteur, des processus de traitement étant commandés avec la bande de matériau en fonction de signaux de sortie des détecteurs, caractérisé en ce que les deux marques sont formées chacune au moins d'un groupe (1, 2) de codes à bâtonnets (5, 6), et que les codes à bâtonnets (5) de l'un des groupes sont, après détection par l'un des détecteurs, utilisé comme rythmeur (I), pour activer une séquence d'impulsions de sortie (15), qui sont formées ou déclenchées par des signaux de sortie provenant de l'autre détecteur utilisé comme détecteur de code (II) ; que la séquence d'impulsions de sortie (15) est, dans un comparateur (11), comparée à une séquence d'impulsions prédéfinie ; et que la commande du processus de traitement considéré ci-dessus est mise en oeuvre en fonction du résultat de la comparaison.

2. Procédé selon la revendication 1, caractérisé en ce que la séquence d'impulsions de sortie (15) du détecteur de code (II) est introduite dans un registre à décalage.

3. Procédé selon la revendication 1 ou 2, caractérisé en ce que des impulsions d'horloge (13) sont produites dans le détecteur de signaux d'horloge (I) à partir des bords avant (3), qui sont en avance dans la direction de déplacement de la bande, et/ou des bords arrière (4), qui sont en retard, de codes à bâtonnets (5), appartenant à l'un des groupes (1) et ayant la forme de zones sombres, et sont utilisées pour activer ou synchroniser le détecteur de code (II).

4. Procédé selon la revendication 3, caractérisé en ce que le détecteur de code (II) est ensuite activé à l'aide des impulsions d'horloge (13) quand il détecte des zones de codes à bâtonnets (6) ou des zones entre les bâtonnets, à une certaine distance des bords de ces zones.

5. Procédé selon la revendication 3 ou 4, caractérisé en ce que les impulsions d'horloge (13) sont transformées en impulsions de déclenchement, qui déclenchent ou synchronisent le détecteur de code (II).

6. Procédé selon l'une des revendications précédentes, caractérisé en ce qu'on utilise des impulsions numériques pour les impulsions d'horloge (13), les impulsions de déclenchement (14) et/ou la séquence d'impulsions de sortie (15) du détecteur de code (II).

7. Dispositif pour mettre en oeuvre le procédé selon l'une des revendications ci-dessus, comportant deux détecteurs destinés à détecter des marques sur la bande de matériau, une unité d'évaluation destinée à évaluer les signaux de sortie des détecteurs, et un dispositif de commande qui, en fonction du résultat de l'évaluation faite par le dispositif d'évaluation, commande le traitement de la bande de matériau, caractérisé en ce que les deux marques sont formées chacune au moins d'un groupe (1, 2) de codes à bâtonnets (5, 6) ; qu'un détecteur, servant de détecteur de signaux d'horloge (I), détecte des codes à bâtonnets (5) d'un groupe de marques (1) et produit des signaux d'horloge (13), qui activent une séquence d'impulsions de sortie (15) de l'autre détecteur, lequel en tant que détecteur de code (II) détecte des codes à bâtonnets (5) d'un autre groupe de marques (2) ; que le dispositif d'évaluation comporte un comparateur (11), lequel compare la séquence d'impulsions de sortie (15) du détecteur de code (II) à une séquence d'impulsions mémorisées dans une mémoire et, en cas de concordance, avec la séquence d'impulsions mémorisée, du code détecté ressortant de la séquence d'impulsions de sortie (15), actionne le dispositif de commande.

8. Dispositif selon la revendication 7, caractérisé en ce que le comparateur (11) comporte un registre à décalage, lequel enregistre la séquence d'impulsions de sortie (15), laquelle comporte des impulsions numériques, du détecteur de code (II), et réalise une comparaison permanente.

9. Bande de matériau, comportant des codes à bâtonnets, appliqués essentiellement parallèlement les uns aux autres et pouvant être détectés par des détecteurs (I, II), pour la mise en oeuvre du procédé selon l'une des revendications 1-6, où on a, dans son sens de déplacement, en alternance des zones claires (9) et des zones foncées formant les codes à bâtonnets (5, 6), caractérisée en ce que deux groupes (1, 2) de codes à bâtonnets (5, 6) sont affectés l'un à l'autre de telle sorte que les bords avant (3) ou les bords arrière (4) de l'un des groupes (1) de codes à bâtonnets (5) se retrouvent sur les zones de l'autre groupe (2) sans domaine marginal.

10. Bande de matériau selon la revendication 9, caractérisée en ce que les bords avant (3) ou les bords arrière (4) de l'un des groupes (1) de codes à bâtonnets (5) se retrouvent sur des parties de zone sans domaine marginale.

11. Bande de matériau selon la revendication 9 ou 10, caractérisée en ce que les codes à bâtonnets (5, 6) de chaque groupe (1, 2) se trouvent à des distances réciproques identiques.

12. Bande de matériau selon l'une des revendications 9-11, caractérisée en ce que le nombre des codes à bâtonnets (5) de l'un des groupes (1), qui sert aux signaux d'horloge, est supérieur au nombre des codes à bâtonnets (6) de l'autre groupe (2).

13. Bande de matériau selon l'une des revendications 9-12, caractérisée en ce que les codes à bâtonnets (5, 6) des deux groupes (1, 2) sont le long de leurs domaines terminaux reliés l'un à l'autre par des bandes rectangulaires étroites (8), qui courent perpendiculairement aux codes à bâtonnets (5, 6).

Fig.1

Fig.2